Europäisches Patentamt

European Patent Office

Office européen des brevets

(11) Publication number: **0 351 940**
**A2**

(12) # EUROPEAN PATENT APPLICATION

(21) Application number: **89305017.9**

(51) Int. Cl.⁴: **C04B 35/26**

(22) Date of filing: **18.05.89**

The title of the invention has been amended (Guidelines for Examination in the EPO, A-III, 7.3).

(30) Priority: **18.05.88 JP 122661/88**

(43) Date of publication of application:
**24.01.90 Bulletin 90/04**

(84) Designated Contracting States:
**DE FR GB**

(71) Applicant: **MITSUBISHI MINING & CEMENT CO., LTD.**
**5-1, Marunouchi 1-chome Chiyoda-ku Tokyo 100(JP)**

Applicant: **Naitoh, Yoshiyuki**
**8-9-29, Tsukimino**
**Yamato-shi Kanagawa, 242(JP)**

(72) Inventor: **Wada, Hideaki**
**1014, Ooaza Yokoze Yokoze-Machi**
**Chichibu-Gun Saitama, 368(JP)**
Inventor: **Kitahara, Naoto**
**1019, Ooaza Yokoze Yokoze-Machi**
**Chichibu-Gun Saitama, 368(JP)**
Inventor: **Koshimura, Masami**
**1014, Ooaza Yokoze Yokoze-Machi**
**Chichibu-Gun Saitama, 368(JP)**
Inventor: **Ono, Mikiya**
**2435-47, Ooaza Kume**
**Tokorozawa-Shi Saitama, 359(JP)**
Inventor: **Naitoh, Yoshiyuki**
**8-9-29, Tsukimino**
**Yamato-shi Kanagawa, 242(JP)**

(74) Representative: **Carter, Caroline Ann et al**
**ABEL & IMRAY Northumberland House**
**303-306 High Holborn**
**London WC1V 7LH(GB)**

(54) **Composite sintered ceramic material.**

(57) A composite sintered material having high permeability and permittivity which is obtained by mixing a ferrite with a perovskite compound and sintering the mixture, a reaction phase being formed between ferrite particles or between ferrite particles and particles of perovskite compound. The material has a relatively high magnetic loss and dielectric loss.

FIG. 5

# COMPOSITE MATERIAL

The invention relates to a material having both dielectric and magnetic properties.

As electronic devices such as computers, particularly digital devices, have become increasingly popular, electromagnetic interference has come to pose serious problems. Electromagnetic interference results from electromagnetic waves leaking from inadequately shielded electronic devices, for example, devices having a shield box with an inadequate shielding performance. Electromagnetic wave absorbers are therefore provided in the shield casing.

Ferrites and magnetic materials containing ferrites as the main component have heretofore been widely employed as electromagnetic wave absorbers. These materials have a high magnetic loss and efficiently absorb electromagnetic waves in a high frequency band of from several tens of MHz to several GHz.

The use of sintered oxide materials with a high permeability and permittivity has also been proposed. These materials are obtained by using a ferrite and a ferroelectric substance. Japanese Patent Application Laid-open No. Sho-62-144703 (hereinafter referred to as the "preceding application") discloses such materials.

These previously proposed materials have an extremely low dielectric loss although their magnetic loss is sufficiently high. Electromagnetic wave absorbers made of such materials are therefore defective in that they only absorb waves of particular modes and their position within the shield box must be chosen having due consideration to the distribution of the electromagnetic fields. Since electromagnetic waves of diverse modes over a wide band zone are present within the shield box, leakage of electromagnetic waves cannot be reduced for the entire frequency band regardless of the position of the absorber.

The present invention is concerned with the problem of alleviating the problems encountered in the prior art and of providing a magnetic material with high permeability and permittivity and yet having high magnetic and dielectric losses.

The present invention provides a material which comprises a ferrite of the formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, the material comprising a reaction phase between the ferrite and/or between the ferrite and the dielectric material.

More particularly the invention provides a high permeability and permittivity material which is a sintered composite ceramic material which comprises a ferrite expressed by the chemical formula $MOFe_2O_3$ (wherein M represents one or more metals selected from manganese Mn, nickel Ni, magnesium Mg, cobalt Co, copper Cu, zinc Zn and iron Fe) and a dielectric material in perovskite structure expressed by the chemical formula $ABO_3$ (wherein A represents one or more metals selected from barium Ba, strontium Sr, lead Pb, and calcium Ca and B represents one or more metals selected from titanium Ti, zirconium Zr, zinc Zn, magnesium Mg, niobium Nb, iron Fe, cobalt Co, nickel Ni, chromium Cr and tungsten W), a reaction phase between ferrite particles or between ferrite particle and particle of dielectric material being present in the material.

The term "reaction phase" includes the case where a portion of the dielectric material is present in the ferrite in the form of a solid solution, the case where a portion of the ferrite is present in the dielectric material in the form of a solid solution, and the case where a new crystal phase is present. For example, when barium titanate $BaTiO_3$ is used as a starting material, a reaction between the barium titanate and the ferrite takes place during sintering and produces hexagonal barium titanate in part; this would be formed only above 1460°C and immediately below the melting point if barium titanate were sintered alone. This hexagonal barium titanate is an example of a reaction phase between ferrite particles and particles of dielectric material, the presence of the ferrite having resulted in a modification, in this case the production of a different crystal form, in the barium titanate.

The present invention also provides a method of making a material which comprises forming a mixture comprising a ferrite having the formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, and sintering the mixture to form a reaction phase between the ferrite or between the ferrite and the dielectric material.

More particularly, the invention provides a method of making a material which comprises forming a mixture comprising a ferrite having a particle size of less than 50 $\mu$m, the ferrite having the

formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, and sintering the mixture at 1000°C to 1400°C for 1 to 20 hours, the dielectric material having a particle size of at least 10 μm.

In a preferred method for manufacturing the high permeability and permittivity material of the present invention, a powder of magnetic material comprising a powder of a ferrite of grain size smaller than 50μm and a powder of a dielectric material comprising a perovskite compound having a particle size of 10 μm or greater are mixed, and the resultant mixture is sintered, preferably at 1000 - 1400°C. The sintering time is preferably from 1 to 20 hours.

The particle size of the ferrite is preferably smaller than 50 μm in order to improve the density of the sintered ceramic material and to achieve satisfactory magnetic coupling between ferrite particles. Preferably, the ferrite comprises an ultrafine powder having a particle size of about 1 μm. Such ferrite particles may be obtained, for example, by pulverizing a homogenous ceramic material comprising a ferrite or by chemically synthesizing ferrite particles.

In order for the particles of dielectric material to maintain their dielectric property when mixed with the ferrite and yet not to interfere with the magnetic coupling of the ferrite particles, the dielectric material preferably has a particle size of at least 10 μm, more preferably from 0.1 to 1 mm. Particles of dielectric material having a particle size in the above range may, for example, be obtained by coarsely crushing a sintered ceramic material comprising the dielectric material or by forming granules from an ultrafine powder thereof using an organic binder such, for example, as polyvinyl alcohol, dextrin, or wax emulsion. When dielectric material is less than 10 wt% of the total amount, and when this dielectric material is dispersed uniformly in the organic binder during the formation of granules, an ultrafine powder smaller than 10 μm in grain size is preferably used.

In order to form a reaction phase, the sintering temperature and time are selected suitably depending on the ferrite and dielectric materials used, their relative proportions, and the particle size of each.

With regard to the proportions of the ferrite and the dielectric material, the proportion of ferrite should be somewhat increased when the electromagnetic wave loss is to be increased in the relatively low frequency band, and the proportion of dielectric material should be somewhat increased when it is desired to increase the electromagnetic wave loss in the high frequency band.

The proportions in which the substances are used will also depend on the permeability and permittivity of the ferrite and dielectric materials used.

If the sintering temperature is too low, or the sintering time is too short, there is insufficient formation of the reaction phase, with the result that the dielectric loss is too low. On the other hand, if the sintering temperature is too high, or the time too long, the permeability of the ferrite material becomes too small, with the result that the magnetic loss becomes too low.

In order to form a high permeability and high permittivity material according to the present invention, ferrite particles are preferably obtained as granules from ferrite powder, preferably using an organic binder. The resultant granules are used with a suitable amount of dielectric material and then press-moulded to obtain a moulding which is in turn sintered.

Ferrites by themselves have permittivities in the low frequency band; in particular, in polycrystalline ferrites such, for example, as nickel zinc ferrite and manganese zinc ferrite, polarization occurs because of the interphase of relatively high resistance which is present in the grain boundary, and a relatively high dielectric loss is observed. By forming a reaction phase between the particles, however, a still higher dielectric loss is obtained, and a relatively high dielectric loss is obtained even at higher temperatures.

Generally, the permeability $\mu$ and permittivity $\epsilon$ of a substance are expressed as follows:
$$\mu = \mu' - j\mu''$$
$$\epsilon = \epsilon' - j\epsilon''$$
$$j = \sqrt{-1}$$
The symbols $\mu'$ and $\epsilon'$ denote respectively effective permeability and effective permittivity $\mu''$ and $\epsilon''$ denoting magnetic loss (imaginary part of $\mu$) and dielectric loss (imaginary part of $\epsilon$) respectively. The material according to the preceding application has a high effective permittivity $\epsilon'$, effective permeability $\mu'$ and magnetic loss $\mu''$. On the other hand, the material according to the present invention also has a high dielectric loss $\epsilon''$.

For example, in order to obtain a high magnetic loss $\mu''$ and dielectric loss $\epsilon''$ with electromagnetic waves of the frequency of 10 MHz or more, it would be necessary to achieve a relatively high effective permeability $\mu'$ and effective permittivity $\epsilon'$ in frequencies lower than said frequency band. In order to achieve a high effective permeability $\mu'$, ferrite particles must be magnetically coupled with one another, and in order to achieve a high effec-

tive permittivity $\epsilon'$ and dielectric loss $\epsilon''$ without interfering with the magnetic coupling, a dielectric material of relatively large particle size must be used. To this end, it is preferable that dielectric particles be present in the ferrite ceramic material in clusters. It is noted, however, that when the amount of dielectric material is small and does not interfere with the magnetic coupling between ferrite particles, then the dielectric material may be dispersed uniformly in the ferrite ceramic material.

The high permeability and permittivity material according to the present invention has a high magnetic loss and an extremely high dielectric loss in the frequency bands of from several tens of MHz to several GHz. The material is therefore useful for preparing an electromagnetic wave absorber suitable for use within a shield box of an electronic device to reduce leakage of electromagnetic waves in the said frequency band.

Accordingly, the invention also relates to the use of the material of the invention, or prepared by a method in accordance with the invention, for absorbing electromagnetic waves, for example in an electronic device.

As one example of a high permeability and permittivity material according to the present invention, a material made from nickel zinc ferrite and barium titanate will now be described in detail, together with an example of one method for making the material. It should be noted that the present invention is in no way limited by the material and method described but covers generally the use of any ferrite and any dielectric material that has a perovskite structure and forms a reaction phase with the ferrite particles.

To produce a barium titanate powder, barium carbonate $BaCO_3$ and titania $TiO_2$ were mixed in a suitable ratio and used as the starting material. The mixture was sintered at 1400°C to obtain barium titanate $BaTiO_3$, which in turn was pulverized to a particle size of about 0.5 $\mu$m, and subsequently formed into granules (to give a particle size of about 200 $\mu$m) to obtain a powder of barium titanate.

In order to produce a nickel zinc ferrite powder, nickel carbonate $NiCO_3$, ferric oxide $Fe_2O_3$ and zinc oxide $ZnO$ were mixed in a ratio corresponding to the formula $(Ni_{0.3}Zn_{0.7})OFe_2O_3$. The mixture was calcined at 1000°C, pulverized to a particle size of about 1 $\mu$m, and then granulated to obtain a powder of calcined ferrite. A ceramic material in accordance with the invention was produced when the calcined ferrite powder and a suitable amount of barium titanate powder were press-moulded and sintered at 1250°C for 10 hours in air.

The invention will now be further described, by way of example only, with reference to the accompanying drawings, in which:

Fig. 1 shows frequency dependent changes in the complex permeability of a sintered ceramic material in accordance with the invention;

Fig. 2 shows frequency dependent changes in the complex permittivity of the sintered ceramic material referred to in connection with Fig. 1;

Fig. 3 shows X-ray diffraction patterns of the sintered ceramic material referred to in connection with Figs. 1 and 2;

Fig. 4 shows a test apparatus for examining the effect of electromagnetic wave absorption; and

Fig. 5 shows the result of measurements made using the apparatus illustrated in Fig. 4.

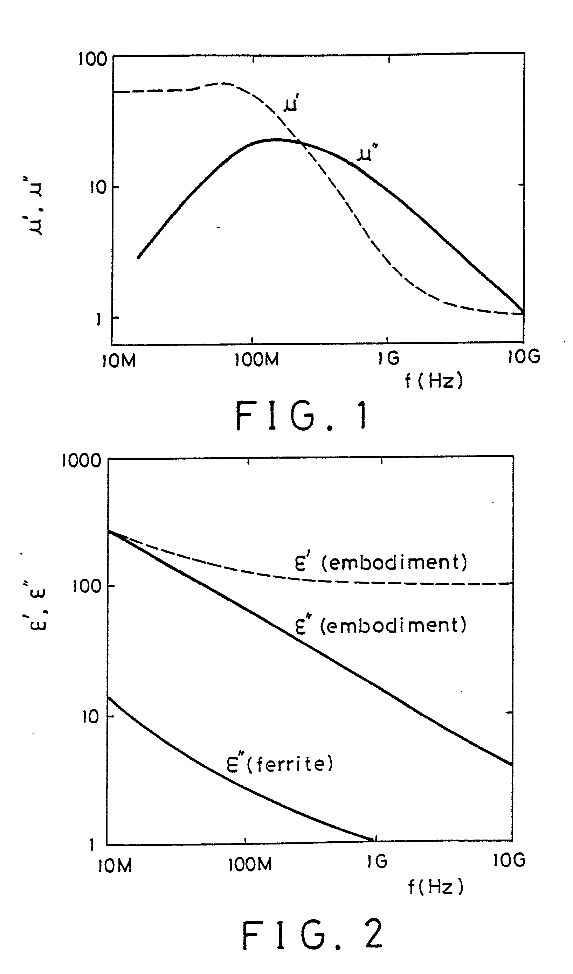

Fig. 1 shows frequency-dependent changes in the complex permeability of a sintered ceramic material in accordance with the invention and Fig. 2 shows frequency-dependent changes in the complex permittivity. The sintered ceramic material used for measurement was obtained by the method described above by way of example from a 1 : 1 mixture of nickel zinc ferrite $(Ni_{0.3}Zn_{0.7})OFe_2O_3$ and barium titanate $BaTiO_3$.

Figs. 1 and 2 indicate that the sintered ceramic material has a high magnetic loss and an extremely high dielectric loss in frequency band zones of from 10 MHz to 10 GHz, particularly in band zones of from several tens of MHz to several GHz.

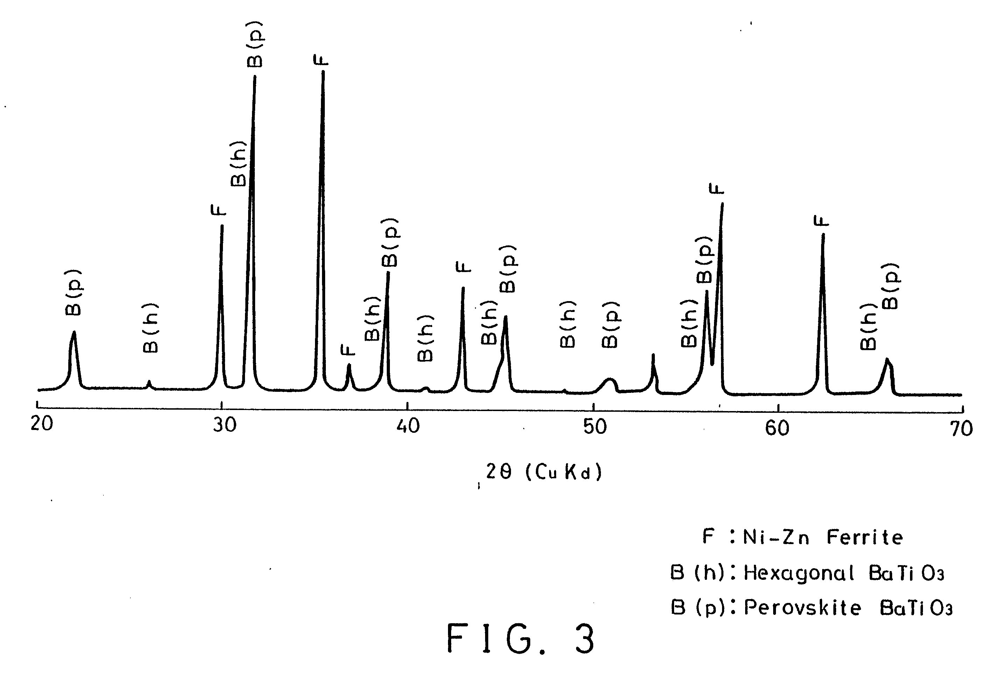

Fig. 3 shows the X-ray diffraction pattern of the sintered ceramic material referred to in connection with Figs. 1 and 2. In addition to the diffraction patterns of Ni-Zn ferrite and perovskite barium titanate, the diffraction pattern of a hexagonal barium titanate is observed.

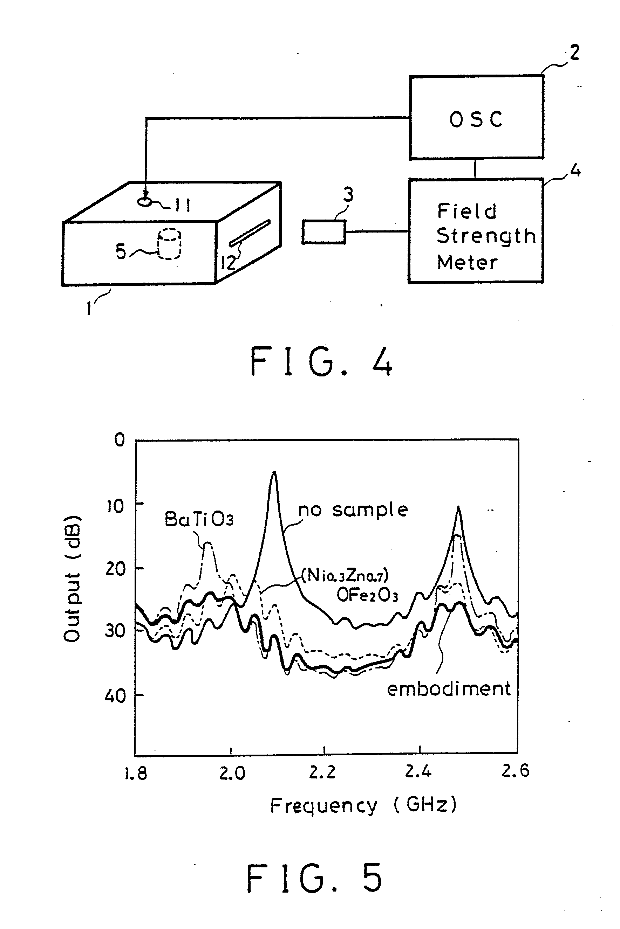

Fig. 4 shows a text apparatus for examining the effect of electromagnetic wave absorption. A hole 11 is provided in the top surface of a metallic shielding box 1 and a slit 12 in the side of the box 1. An output line of a signal generator 2 is inserted in the hole 11 to introduce electromagnetic waves into the shielding box 1. A probe 3 is arranged near the slit 12 and is connected to a field strength meter 4. The field strength meter 4 is connected to the signal generator.

Using the test apparatus, the intensity of electromagnetic waves leaking from the slit 12 was measured with the field strength meter 4 while varying the oscillation frequencies from the generator 2 for the cases where a sample 5 was placed inside the shielding box 1 and where the sample 5 was omitted. The size of the metallic shielding box 1 used was 152 mm in length, 268 mm in width and 58 mm in height. The sample was cylindrical, having a diameter of 30 mm and a height of 30 mm.

Fig. 5 shows the result of measurements made using the test apparatus. As the sample 5, sintered ceramic materials comprising barium titanate $BaTiO_3$, nickel zinc ferrite $(Ni_{0.3}Zn_{0.7})OFe_2O_3$ and a

composite material derived from these two materials in the ratio of 1 : 1 were used; the composite material was the same as that referred to in connection with Figs. 1 and 2. Fig. 5 indicates that the composite ceramic material derived from ferrite and barium titanate is capable of decreasing the intensity of the electromagnetic waves leaking from the metallic shielding box by about 20 dB.

The same result was obtained irrespective of the position of the sample inside the shield box, and when a similar box was used from which electromagnetic waves of different frequencies leaked.

The material of the invention may contain a reaction phase between ferrite particles and/or between ferrite particles and particles of dielectric material. Where a reaction phase between ferrite particles is formed it is believed that dielectric material melted by sintering enters between ferrite particles but the invention is not be be limited by this explanation.

## Claims

1. A material which comprises a ferrite of the formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, the material comprising a reaction phase between the ferrite and/or between the ferrite and the dielectric material.

2. A material as claimed in claim 1, wherein the reaction phase comprises hexagonal barium titanate.

3. A composite sintered ceramic material with high permeability and permittivity which comprises ferrite expressed by the chemical formula $MOFe_2O_3$ (wherein M represents one or more metals selected from manganese, nickel, magnesium, cobalt, copper, zinc and iron) and a dielectric material with perovskite structure expressed by the chemical formula $ABO_3$ (wherein A represents one or more metals selected from barium, strontium, lead and calcium, and B one or more metals selected from titanium, zirconium, zinc, magnesium, niobium, iron, cobalt, nickel, chromium and tungsten), the material containing a reaction phase between ferrite particles or between ferrite particles and particles of the dielectric material.

4. A method of making a material which comprises forming a mixture comprising a ferrite having the formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, and sintering the mixture to form a reaction phase between the ferrite and/or between the ferrite and the dielectric material.

5. A method of making a material which comprises forming a mixture comprising a ferrite having a particle size of less than 50 μm, the ferrite having the formula $MOFe_2O_3$, wherein M represents one or more of manganese, nickel, magnesium, cobalt, copper, zinc and iron, and a dielectric material with perovskite structure having the formula $ABO_3$, wherein A represents one or more of barium, strontium, lead and calcium and B represents one or more of titanium, zirconium, zinc, magnesium, niobium, iron, cobalt, nickel, chromium and tungsten, and sintering the mixture at 1000°C to 1400°C for 1 to 20 hours, the dielectric material having a particle size of at least 10 μm.

6. A method as claimed in claim 4 or claim 5, wherein the ferrite comprises an ultrafine powder having a particle size of about 1 μm.

7. A method as claimed in any one of claims 4 to 6, wherein the dielectric material comprises a powder having a particle size of 0.01 to 1 mm.

8. A method as claimed in claim 7, wherein the powder of dielectric material is obtained by forming the material into granules using an organic binder.

9. A method of manufacturing a composite sintered ceramic material with high permeability and permittivity which includes the steps of mixing a powder of magnetic material containing as the main component ferrite expressed by the chemical formula $MOFe_2O_3$ (wherein M represents one or more metals selected from manganese, nickel, magnesium, cobalt, copper, zinc and iron) with a powder of dielectric material containing as the main component a perovskite compound expressed by the chemical formula $ABO_3$ (wherein A represents one or more metals selected from barium, strontium, lead and calcium, and B one or more metals selected from titanium, zirconium, zinc, magnesium, niobium, iron, cobalt, nickel, chromium and tungsten), and sintering the resultant mixture, the powder of magnetic material containing an ultrafine powder of ferrite having a grain size of smaller than 50 μm, the powder of dielectric material containing a powder of perovskite compound having a particle size of greater than 10 μm, and the sintering being carried out for 1 to 20 hours at 1000°C - 1400°C.

10. The use of a material as claimed in claim 1 or claim 2, or as produced by a method as claimed in any one of claims 3 to 9, for absorbing electromagnetic waves, for example in an electronic device.

F I G . 1

F I G . 2

EP 0 351 940 A2

F : Ni-Zn Ferrite

B (h): Hexagonal BaTiO₃

B (p): Perovskite BaTiO₃

FIG. 3

F I G. 4

F I G. 5